# EUROPÄISCHE PATENTSCHRIFT

(11) **EP 2 007 539 B1**
(45) Veröffentlichungstag und Bekanntmachung des Hinweises auf die Patenterteilung: **21.04.2010**
(21) Anmeldenummer: 07703917.0
(22) Anmeldetag: 16.01.2007
(51) Int. Cl.: B23B 41/02, B23B 35/00, B23B 51/02, B23B 51/06

(54) **Verfahren zum Einbringen eines Tiefloches**
Method for making a deep hole
Procédé de perçage d'un trou profond

(30) Priorität: 19.04.2006 DE 102006018322
(43) Veröffentlichungstag der Anmeldung: 31.12.2008
(73) Patentinhaber: WALTER AG, 72072 Tübingen (DE)
(72) Erfinder: SCHWEIGHÖFER, Günter, 63654 Büdingen (DE)
(74) Vertreter: Köppen, Manfred
(86) Internationale Anmeldenummer: PCT/EP2007/050407
(87) Internationale Veröffentlichungsnummer: WO 2007/118718

(56) Entgegenhaltungen:
- WO-A-03/097280
- JP-A- 2 232 111
- JP-A- 56 076 314
- KENNAMETAL: "NEWS 2005 - Cutting tool innovations" [Online] 2005, KENNAMETAL , LATROBE, PA-USA , XP002432501 Gefunden im Internet: URL:http://www.kennametal.com/images/repos itories/PDFs/News1_05GB.pdf> [gefunden am 2007-05-07] Seite A39 Verfahren: Anbohren mit PCM Einsätze, und anschliessend Bohren mit HPM/HPGM Einsätze (Method: Centering using PCM inserts, and then drilling using HPM/HPGM inserts) Seite A35 - Seite A38
- GÜNTHER WIRTH: "Technik-Katalog, Einsatzempfehlungen und -richtwerte, KT018" [Online] November 2002 (2002-11), GÜNTHER WIRTH , BALZHEIM, DEUTSCHLAND , XP002431562 Gefunden im Internet: URL:http://www.gw-tools.de/site/download/k t018.pdf> [gefunden am 2007-04-26] Seite 55 Anwendungsempfehlung GW 101 (Recommended use of GW101) Seiten 46,47,49 Daten für GW101 und GW 142 insbesondere Spitzenwinkel (sigma) (Data for tools GW101 and GW142 especially drill point angle (sigma))

## Beschreibung

Die vorliegende Erfindung betrifft ein Verfahren zum Einbringen eines Tieflochs nach dem Oberbegriff des Anspruchs 1. Ein solches Verfahren ist aus dem Dokument XP 0024 32 501 bekannt.

Insbesondere beim handgeführten Bohren, jedoch auch bei Verwendung von extrem langen und daher instabilen Tieflochbohrern ist es häufig üblich, zunächst mit Hilfe eines Pilotbohrers eine Ausnehmung bzw. eine Sackbohrung geringer Tiefe in das Material einzubringen. In einem nächsten Arbeitsschritt wird dann der eigentliche Tieflochbohrer exakt auf der Ausnehmung positioniert, so daß die mit Hilfe des Pilotbohrers eingebrachte Sackbohrung den nachfolgenden Tieflochbohrer zentriert und/oder pilotiert. Beim Pilotieren wird mit Hilfe des Pilotbohrers ein Sackloch in das zu bearbeitende Material eingebracht. Der Pilotbohrer hat dabei einen geringfügig größeren Bohrdurchmesser als der nachfolgende Tieflochbohrer. Anderenfalls würde der Tieflochbohrer beim Eindringen in das Sackloch an den stirnseitigen Ecken der Hauptschneide extrem belastet, was zu einem erhöhten Verschleiß des Tieflochbohrers führt.

Nachteil dieses Verfahrens ist jedoch, daß nach dem Einbringen des Tieflochs aufgrund des Pilotbohreres mit größerem Bohrdurchmesser im oberen Bereich ein Absatz verbleibt, der durch die Bohrtiefe des Pilotbohrers festgelegt wird.

In Fällen, in denen ein solcher Absatz im Tiefloch nicht erwünscht ist, wird mit Hilfe des Pilotbohrers lediglich eine Art Ausnehmung in das zu bearbeitende Material eingebracht. Der Pilotbohrer setzt beim Bohren nur kurz auf der Materialoberfläche auf, ohne nennenswert in das Material einzudringen. Die umfangsseitigen Nebenschneiden des Pilotbohrers kommen beim Einbringen einer solchen Ausnehmung nicht mit dem Material in Kontakt. Die Ausnehmung, die im wesentlichen ein direktes Abbild der im allgemeinen kegelförmigen Bohrspitze des Pilotbohrers ist, reicht jedoch aus, um den nachfolgenden Tieflochbohrer zu zentrieren.

Typische Tieflochbohrer haben einen Spitzenwinkel von etwa 130 bis 140° und einen relativ dicken Kernbereich von etwa 25 - 40% des Durchmessers des Bohrers. Neuere Versuchsergebnisse haben gezeigt, daß ein Spitzenwinkel von etwa 140° die besten Ergebnisse erzielt. Im Bereich des Kernbereichs ist der Spitzenwinkel flacher, meist liegt er dort bei 160°. Die Geometrie des Tieflochbohrers ist auf den eigentlichen Bohrvorgang des Tieflochs optimiert. Dabei wird insbesondere auf eine optimale Spanbildung und Spanabführung Wert gelegt.

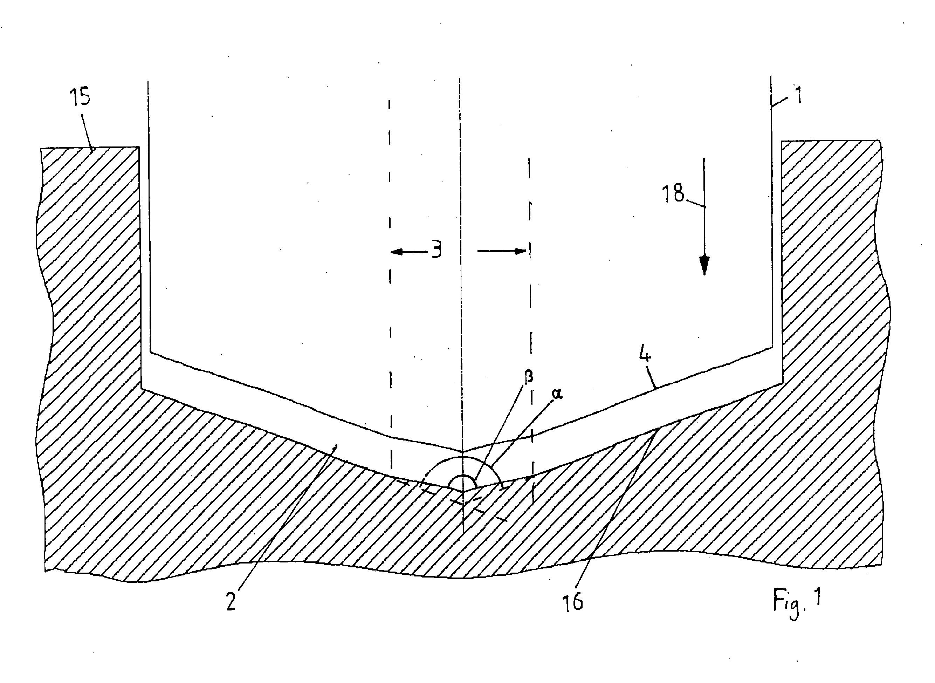

Als Pilotbohrer wird üblicherweise ein Bohrer mit im wesentlichen der gleichen Spitzengeometrie wie der Tieflochbohrer verwendet, wobei der Pilotbohrer einen etwas größeren Bohrdurchmesser hat und natürlich viel kürzer und damit steifer ist, so daß mit dem Pilotbohrer in einfacher Weise eine entsprechende zentrierende oder pilotierende Ausnehmung in das zu bearbeitende Material eingebracht werden kann. Im wesentlichen ergibt sich dann die in Figur 1 gezeigte Situation. Dargestellt ist der Tieflochbohrer 1, der gerade in die von dem Pilotbohrer (nicht gezeigt) in das zu bearbeitende Material 15 eingebrachte Sackbohrung 2 eintaucht. Die Sackbohrung 2 hat einen Durchmesser, der etwas größer ist als der Durchmesser des Tieflochbohrers 1, wie deutlich in Figur 1 zu erkennen ist. Die Kontur des Sackloches 2 gibt im wesentlichen die Spitzengeometrie des Pilotbohrers wieder. Der Spitzenwinkel α beträgt typischerweise etwa 140°. Ein Kernbereich 3, der etwa 25 - 40% des Bohrerdurchmessers bzw. Sacklochdurchmessers ausmacht, hat einen flacheren Spitzenwinkel β von ca. 160°. Der Tieflochbohrer 1 hat im wesentlichen die gleiche Spitzengeometrie.

Der Grund des Sacklochs 2 hat somit im wesentlichen eine Kegelform, wobei die Kegelspitze im Kernbereich 3 etwas abgeflacht ist. Deutlich zu erkennen ist, daß im Querschnitt die Kegelform des Sackloches 2 nahezu parallel zu der Hauptschneide 4 des Tieflochbohrers verläuft.

Beim Einbringen des Tieflochbohrers 1 in das Sackloch 2 in Vorschubrichtung 18 wird der Tieflochbohrer 1 aufgrund der nahezu völligen Übereinstimmung der Spitzenkontur des Tieflochbohrers 1 mit der Struktur des Sacklochbodens im wesentlichen abrupt und vollflächig auf den Grund des Sacklochs 2 auftreffen. Dies führt zu einer abrupten Kraftübertragung. Es hat sich gezeigt, daß diese abrupte Kraftübertragung sowohl für den Verschleiß des Tieflochbohrers als auch für die Genauigkeit der in das Material 15 einzubringenden Tieflochbohrung von Nachteil ist.

Insbesondere bei der Verwendung von Tieflochbohrern aus Hartmetall, die mit hohem Vorschub und hohen Umdrehungszahl von z.B. zwischen 1000 und 10000 Umdrehungen pro Minute betrieben werden, ist die abrupte Änderung der Kraftübertragung von großem Nachteil.

Ausgehend von diesem Stand der Technik ist es daher die Aufgabe der vorliegenden Erfindung, ein Verfahren zum Einbringen eines Tieflochs bereitzustellen, mit dessen Hilfe der Verschleiß am Tieflochbohrer deutlich reduziert werden kann und zudem jegliche Kräfte weniger abrupt in das Werkstück übertragen werden.

Diese Aufgabe wird dadurch gelöst, daß zunächst mit Hilfe eines Pilotbohrers mit einem Schaft und einem Kopfabschnitt, wobei der Kopfabschnitt an einer Stirnfläche eine kegelförmige Hauptschneide und zwei spiralförmig an der Außenseite des Kopfabschnitts verlaufende Spannuten aufweist, eine rotationssymmetrische Ausnehmung in das zu bearbeitende Material eingebracht wird, und anschließend mit Hilfe eines Tieflochbohrers das einzubringende Tiefloch in dem Grund der rotationssymmetrischen Ausnehmung gebohrt wird, wobei der Pilotbohrer einen Spitzenwinkel aufweist, der größer als der Spitzenwinkel des Tieflochbohrers ist, wobei die Kerndicke des Kopfabschnittes des Pilotbohrers kleiner als die Kerndicke des Kopfabschnittes des Tieflochbohrers ist.

Mit anderen Worten wird im Gegensatz zum Stand der Technik die rotationssymmetrische Ausnehmung bzw. das zur Zentrierung bzw. Pilotierung eingebrachte Sackloch mit einem Bohrgrund ausgeführt, der flacher ist als die Spitze des Tieflochbohrers. Dies hat zur Folge, daß der Tieflochbohrer zunächst im Zentrum des Tieflochbohrers mit dem Grund der rotationssymmetrischen Ausnehmung in Kontakt tritt. Erst dann, wenn der Tieflochbohrer tiefer in das Material eingebracht wird, greift allmählich ein immer größerer Anteil der Hauptschneide mit dem Werkstück in Eingriff, so daß keine abrupte, sondern eine allmähliche Änderung des Kraftübertrags vom Bohrer in das zu bearbeitende Material erfolgt.

Dieses "weiche" Anbohren führt zu einer deutlich verbesserten Standzeit des nachfolgenden Tieflochbohrwerkzeugs.

Dadurch, daß am Kopfabschnitt spiralförmig verlaufende Spannuten vorgesehen sind, ergibt sich ein Kernbereich, um den die spiralförmigen Spannuten verlaufen. Die geringere Kerndicke führt zu einer verbesserten Zentrierungswirkung der durch den Pilotbohrer eingebrachten rotationssymmetrischen Ausnehmung.

In einer besonders bevorzugten Ausführungsform ist der Spitzenwinkel des Pilotbohrers mindestens 3°, vorzugsweise zwischen 5° und 20° und besonders bevorzugt zwischen 8° und 12° größer als der Spitzenwinkel des Tieflochbohrers.

Grundsätzlich besteht bei der Verwendung des Pilotbohrers ebenfalls das Problem, daß der Pilotbohrer beim Aufsetzen auf das zu bearbeitende Material an seiner Spitze keinerlei Führung hat. Daher ist grundsätzlich ein größerer Spitzenwinkel nachteilig, da dann die Selbstzentriereigenschaften des Pilotbohrers schlechter werden. Allerdings wird dieser Nachteil durch die beschriebenen Vorteile aufgewogen. Dies gilt insbesondere bei der Verwendung von Pilotbohrern aus Hartmetall, da Hartmetall durch seinen hohen Elastizitätsmodul dem Pilotbohrer eine hohe Steifigkeit verleiht. In einer besonders bevorzugten Ausführungsform ist die Kerndicke des Kopfabschnitts des Pilotbohrers kleiner als 25%, vorzugsweise kleiner als 22% und besonders bevorzugt zwischen 18 und 22% des Durchmessers des Pilotbohrers an der Stirnfläche seines Kopfabschnitts. Versuche haben gezeigt, daß eine solche Kerndicke die besten Ergebnisse erzielt. Grundsätzlich ist die Kerndicke möglichst klein zu wählen, um besonders gute Zentriereigenschaften zu erzielen. Wird jedoch die Kerndicke zu gering gewählt, führt dies zu einer Schwächung des Pilotbohrers, was im schlimmsten Fall zu einem Bohrerbruch führen kann.

Da es im wesentlichen nur im Stirnbereich auf einen möglichst geringen Bohrerkerndurchmesser ankommt, ist in einer weiteren besonders bevorzugten Ausführungsform vorgesehen, daß der Pilotbohrer einen Bohrkern mit in Richtung des Schaftes ansteigendem Durchmesser hat. Dadurch kann der Kerndurchmesser an der Bohrerspitze weiter reduziert werden, ohne daß es zu einer nennenswerten Schwächung des Pilotbohrers kommt.

In einer weiteren besonders bevorzugten Ausführungsform hat der Bohrkopf des Pilotbohrers im Bereich des stirnseitigen Endes der Spiralnuten Ausspitzungen, die derart ausgebildet sind, daß an der Stirnseite ein kleiner Kernbereich von weniger als 20%, vorzugsweise von weniger als 15% und besonders bevorzugt von etwa 5-10% des Durchmessers des Pilotbohrers gebildet wird. Auch diese Maßnahme führt dazu, daß die rotationssymmetrische Ausnehmung, die von dem Pilotbohrer erzeugt wird, lediglich in einem sehr kleinen Bereich im Zentrum der Ausnehmung abflacht. Mit anderen Worten wird erfindungsgemäß versucht, den Spitzenwinkel des Pilotbohrers über einen großen Bereich, der möglichst, weit ins Zentrum hineinreicht, beizubehalten. Erst im kleinen Kernbereich wird ein Kernspitzenwinkel gemessen, der größer als der Spitzenwinkel der Hauptschneiden ist.

Weiterhin ist vorzugsweise vorgesehen, daß der Durchmesser des Pilotbohrers größer als der Durchmesser des Tieflochbohrers ist. Dabei muß zwar genügend Freiraum (Spiel) zwischen Pilotbohrung und dem Tieflochbohrer entstehen, damit der Tieflochbohrer beim Eindringen in das Sackloch an den stirnseitigen Ecken der Hauptschneide nicht extrem belastet wird, was zu einem erhöhten Verschleiß des Tieflochbohrers führt. Andererseits darf der Freiraum aber nicht so groß werden, daß die Führung des Tieflochbohrers beeinträchtigt wird.

Dabei ist es besonders bevorzugt, wenn Pilotbohrer und Tieflochbohrer denselben Nenndurchmesser haben, jedoch als Spielpassungssystem entsprechend DIN ISO 286 ausgeführt sind.

Mit Vorteil wird bei einer Toleranz des Tieflochbohrers h7 der Pilotbohrer mit der Toleranz p7 hergestellt. Bei anderer Toleranz des Tieflochbohrers ist die Toleranz des Pilotbohrers so zu wählen, daß sie das gleiche Spiel ergibt. Die besonders bevorzugte Größe des Spiels ergibt sich somit aus der folgenden Tabelle:

| | h7 | | p7 | | Spiel | | |
|---|---|---|---|---|---|---|---|
| Drm.-Bereich [mm] | Min [µm] | max[µm] | min[µm] | max[µm] | min[µm] | max[µm] | mittel[µm] |
| ≤3 | -10 | 0 | 6 | 16 | 6 | 26 | 16 |
| >3 ... 6 | -12 | 0 | 12 | 24 | 12 | 36 | 24 |
| >6 ... 10 | -15 | 0 | 15 | 30 | 15 | 45 | 30 |
| >10 ... 18 | -18 | 0 | 18 | 36 | 18 | 54 | 36 |
| >18 ... 30 | -21 | 0 | 22 | 43 | 22 | 64 | 43 |

In der linken Spalte sind verschiedene Nenndurchmesserbereiche angegeben. Die zweite und dritte Spalte beschreiben die Toleranzen der Toleranzklasse h7 in Abhängigkeit von den verschiedenen Durchmesserbereichen. Wird somit ein Tieflochbohrer mit einem Nenndurchmesser von 5 mm mit einer Toleranz h7 gefertigt, so bedeutet dies, daß der Durchmesser des Tieflochbohrers zwischen 4,988 und 5 mm liegt. Die vierte und fünfte Spalte beschreiben die Toleranzen der Toleranzklasse p7 in Abhängigkeit von den verschiedenen Durchmesserbereichen. Wird somit ein Pilotbohrer mit einem Nenndurchmesser von 5 mm mit einer Toleranz p7 gefertigt, so bedeutet dies, daß der Durchmesser des Pilotbohrers zwischen 5,012 und 5,024 mm liegt. Als Spiel ergibt sich somit ein Wert zwischen 0,012 (= 5,012 - 5,0) mm und 0,036 (= 5,024 - 4,988) mm, wie in den Spalten 6 und 7 aufgeführt ist.

Üblicherweise wird der Kopfabschnitt des Pilotbohrers leicht konisch ausgeführt und zwar derart, daß im Bereich der Spannuten der Durchmesser des Bohrers von der Stirnseite in Richtung des Schaftes abnimmt. Mit anderen Worten hat der Pilotbohrer an seiner Stirnseite den größten Durchmesser. Grund hierfür ist, die Berührungsfläche der Nebenschneidkante des Pilotbohrers an den Wänden der Bohrung zu reduzieren. Ein Nachschleifen des Pilotbohrers führt automatisch zu einer Verkürzung des Bohrer und damit auch zu einer Durchmesserreduzierung. Dies wiederum führt zu einer Reduzierung des Spiels. In einer besonders bevorzugten Ausführungsform ist daher vorgesehen, daß der Kopfabschnitt konisch ausgebildet ist, so daß er sich in Richtung des Schaftabschnittes um weniger als 3 µm, besonders bevorzugt zwischen 1 und 2 µm pro Millimeter Nutenlänge verjüngt.

Erfindungsgemäß kommt es somit auf das Zusammenspiel zwischen Pilotbohrer einerseits und nachfolgendem Tieflochbohrer andererseits an. Grundsätzlich wäre es daher möglich, übliche Pilotbohrer beizubehalten und die Spitzengeometrie des Tieflochbohrers entsprechend zu verändern. Da jedoch die Spitzengeometrie des Tieflochbohrers so ausgebildet ist, daß sehr tiefe Löcher schnell und mit möglichst geringem Verschleiß am Bohrwerkzeug hergestellt werden können, wird erfindungsgemäß vorgesehen, den Pilotbohrer entsprechend abzuändern.

In einer weiteren besonders bevorzugten Ausführungsform wird daher ein Pilotbohrer mit einem Schaft und einem Kopfabschnitt, wobei der Kopfabschnitt an seiner Stirnfläche eine kegelförmige Hauptschneide und zwei spiralförmig an der Außenseite des Kopfabschnitts verlaufende Spannuten aufweist, zur Verfügung gestellt, bei dem der Spitzenwinkel der Hauptschneide größer als 145° ist. Vorzugsweise liegt der Spitzenwinkel der Hauptschneide zwischen 148 und 155° und besonders bevorzugt liegt der Spitzenwinkel bei etwa 150°. Insbesondere bei der Verwendung eines Tieflochbohrers mit einem Spitzenwinkel von 140°, die üblicherweise verwendet werden, ist die Wahl dieses Spitzenwinkels für den Pilotbohrer von großem Vorteil.

Weiterhin ist in einer bevorzugten Ausführungsform vorgesehen, daß die Kerndicke des Kopfabschnitts kleiner als 25%, vorzugsweise kleiner als 22% und besonders bevorzugt zwischen 18 und 22% des Durchmessers des Pilotbohrers an der Stirnfläche seines Kopfabschnitts ist.

Weiterhin weist in einer besonders bevorzugten Ausführungsform der Bohrkern des Bohrkopfs einen in Richtung des Schaftes ansteigenden Durchmesser auf.

In einer weiteren bevorzugten Ausführungsform weist der Bohrkopf im Bereich des stirnseitigen Endes der Spiralnuten Ausspitzungen auf, die derart ausgebildet sind, daß an der Stirnseite ein kleiner Kernbereich von weniger als 20%, vorzugsweise von weniger als 15% und besonders bevorzugt von etwa 5 bis 10% des Durchmessers des Pilotbohrers gebildet wird.

Weiterhin ist in einer besonders bevorzugten Ausführungsform vorgesehen, daß die Länge der Spannuten in axialer Richtung kleiner als der sechsfache Bohrdurchmesser, vorzugsweise kleiner als der fünffache Bohrdurchmesser und besonders bevorzugt in etwa gleich dem 4,5-fachen Bohrdurchmesser beträgt.

Für manche Anwendungsfälle kann es von Vorteil sein, wenn der Pilotbohrer als Anfasbohrer ausgebildet ist. Mit Hilfe des Pilotbohrers kann dann bereits die Anfasung des Tieflochs hergestellt werden. Ein zusätzlicher Arbeitsschritt lediglich zur Herstellung der Anfasung ist nicht notwendig.

Weitere Vorteile, Merkmale und Anwendungsmöglichkeiten werden deutlich anhand der folgenden Beschreibung einer besonderen Ausführungsform sowie der dazugehörigen Figuren. Es zeigen:
- Figur 1: eine schematische Darstellung der Eingriffsverhältnisse nach einem Verfahren des Standes der Technik,
- Figur 2: eine schematische Darstellung der Eingriffsverhältnisse gemäß dem erfindungsgemäßen Verfahren,
- Figur 3: eine Draufsicht auf die Spitze einer Ausführungsform des Pilotbohrers und
- Figur 4: eine abgebrochene perspektivische Seitenansicht auf den Pilotbohrer von Figur 3,

Figur 1 zeigt schematisch die Eingriffsverhältnisse beim Einbringen eines Tieflochbohrers in eine von einem Pilotbohrer vorher eingebrachte Sackbohrung, so wie sie im Stand der Technik vorliegen.

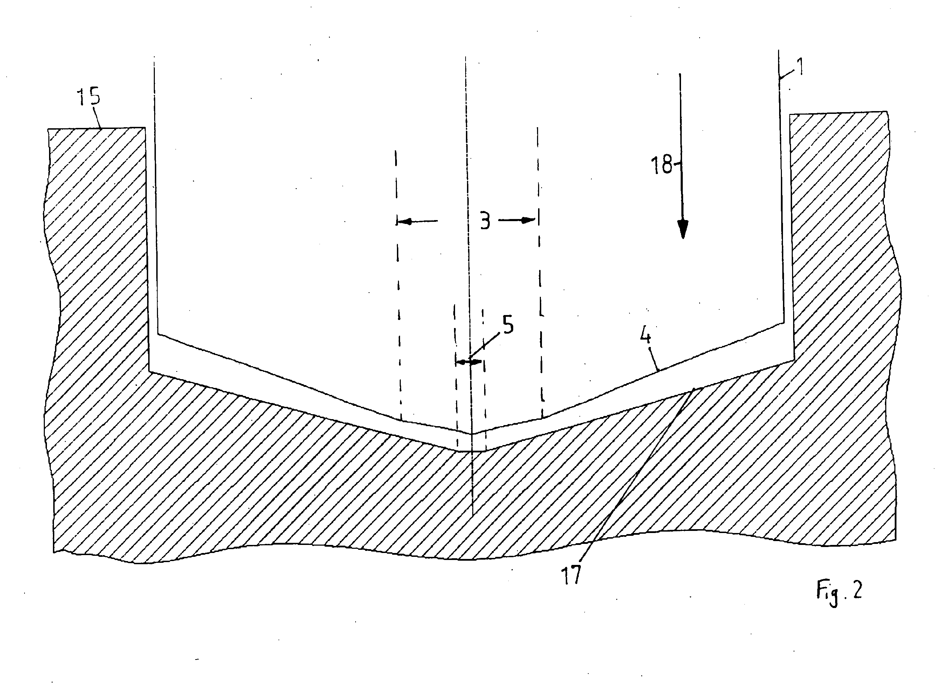

Beim erfindungsgemäßen Verfahren liegen dagegen die in Figur 2 gezeigten Verhältnisse vor. Wie in Figur 1 ist schematisch die Situation gezeigt, kurz bevor der Tieflochbohrer 1 in die von dem Pilotbohrer (nicht gezeigt) vorher eingebrachte Sackbohrung 2 eintaucht. Der in Figur 2 gezeigte Tieflochbohrer 1 entspricht dem in Figur 1 gezeigten Tieflochbohrer. Figur 2 unterscheidet sich von Figur 1 dadurch, daß die Geometrie des Sacklochs und daher die Geometrie des verwendeten Pilotbohrers erfindungsgemäß ausgewählt wurde. Deutlich zu erkennen ist, daß der kegelförmige Bohrgrund 17 des Sacklochs 2 nun wesentlichen flacher verläuft als der Spitzenwinkel der Hauptschneide 4 des Tieflochbohrers 1. Weiterhin ist zu erkennen, daß der von der Kegelform abweichende innere Kernbereich 5 der Sacklochbohrung 2 nun deutlich kleiner ist als der entsprechende Kernbereich 3 des Tieflochbohrers 1. Wird nun der Tieflochbohrer 1 in Pfeilrichtung 18 in Richtung des Sacklochgrunds bewegt, so wird er zunächst in etwa im Übergangsbereich zwischen der Hauptschneide 4 und dem zentralen abgeflachten Bereich 3 das Material 15 berühren. Wird nun die Bewegung in der Vorschubrichtung 18 fortgesetzt, so tritt der Tieflochbohrer 1 mehr und mehr mit dem Werkstück in Eingriff. Im Gegensatz zu der Situation in Figur 1 setzt somit der Bohrer nicht hart, sondern weich im Bohrloch auf. Damit sind die beschriebenen Vorteile verbunden.

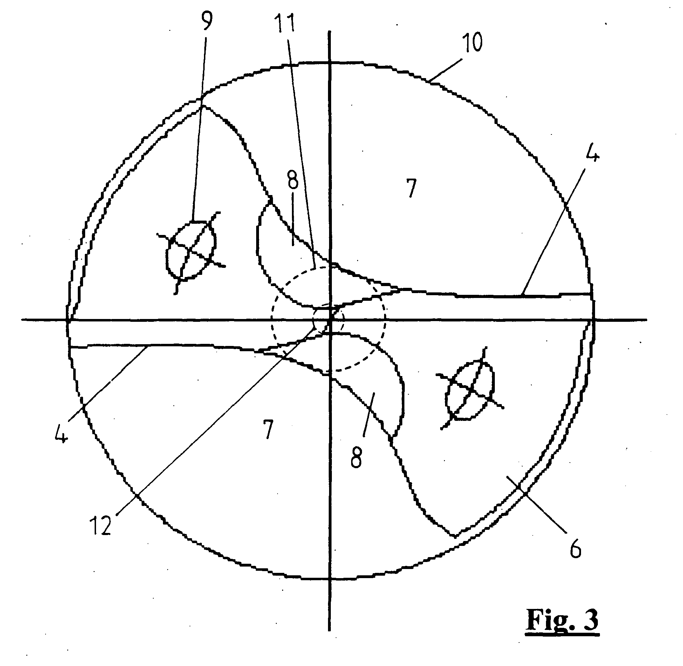

In Figur 3 ist ein Pilotbohrer 6 in einer Ansicht von oben, d.h. auf die Stirnfläche des Bohrkopfs, gezeigt. Deutlich zu erkennen sind die beiden Hauptschneiden 4. Weiterhin sind die Spiralnuten 7 zu erkennen, die im wesentlichen der Spanabfuhr dienen.

Wie in Figur 3 deutlich zu erkennen ist, sind die Spiralnuten 7 derart ausgeführt, daß der Kernbereich einen Durchmesser 11 hat, der etwa 20% des Durchmessers 10 des Bohrers beträgt.

Um insbesondere im Stirnbereich des Bohrers 6 den Kernbereich noch weiter zu reduzieren, sind Ausspitzungen 8 vorgesehen. Durch die Ausspitzungen 8 wird der Kernbereich an seinem stirnseitigen Ende auf einen Durchmesser 12 reduziert, der etwa 7% des Durchmessers 10 des Pilotbohrers beträgt.

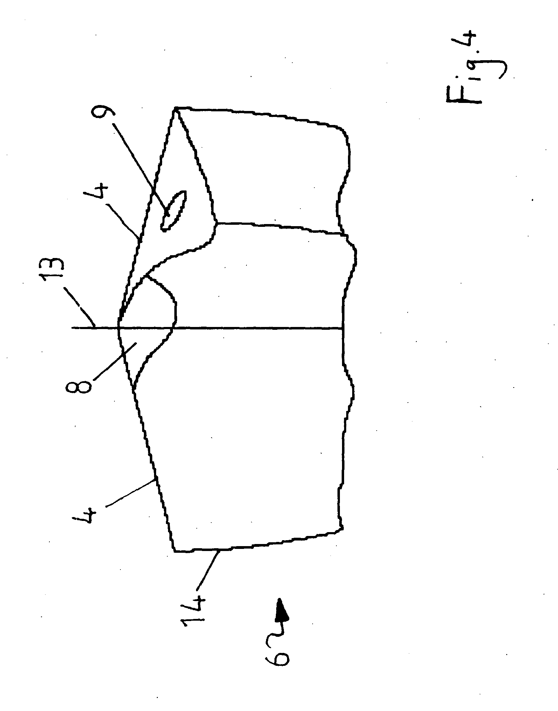

In Figur 4 ist eine erste Seitenansicht auf den Stirnbereich des erfindungsgemäßen Pilotbohrers 6 gezeigt. Auch hier ist ein Kanal 9 für ein Kühl- bzw. Spülfluid gezeigt. Die Hauptschneiden 4 schließen mit der Rotationsachse 13 des Pilotbohrers 6 einen Winkel von etwa 75° ein, so daß sich ein Spitzenwinkel von ca. 150° ergibt.

### Bezugszeichenliste

- 1: Tieflochbohrer
- 2: rotationssymmetrische Ausnehmung bzw. Sackloch
- 3: Kernbereich des Tieflochbohrers
- 4: Hauptschneide
- 5: innerer Kernbereich der rotationssymmetrischen Ausnehmung bzw. des Sacklochs
- 6: Pilotbohrer
- 7: Spannuten
- 8: Ausspitzungen
- 9: Kühlkanal
- 10: Durchmesser des Pilotbohrers
- 11: Kern des Pilotbohrers
- 12: reduzierter Kernbereich an der Bohrspitze
- 13: Rotationsachse des Bohrers
- 14: Nebenschneidkante
- 15: Material
- 16: kegelförmiger Bohrgrund
- 17: flacher kegelförmiger Bohrgrund
- 18: Vorschubrichtung

## Patentansprüche

1. Verfahren zum Einbringen eines Tiefloches in ein zu bearbeitendes Material (15), wobei zunächst mit Hilfe eines Pilotbohrers (6) mit einem Schaft und einem Kopfabschnitt, wobei der Kopfabschnitt an seiner Stirnfläche eine kegelförmige Hauptschneide (4) und zwei spiralförmig an der Außenseite des Kopfabschnitts verlaufende Spannuten (7) aufweist, eine rotationssymmetrische Ausnehmung in das zu bearbeitende Material (15) eingebracht wird und anschließend mit Hilfe eines Tieflochbohrers das einzubringende Tiefloch in den Grund der rotationssymmetrischen Ausnehmung gebohrt wird, wobei der Pilotbohrer (6) einen Spitzenwinkel aufweist, der größer als der Spitzenwinkel des Tieflochbohrers ist, **dadurch gekennzeichnet, daß** die Kerndicke (11) des Kopfabschnittes des Pilotbohrers (6) kleiner als die Kerndicke des Kopfabschnittes des Tieflochbohrers ist.

2. Verfahren nach Anspruch 1, **dadurch gekennzeichnet, daß** der Spitzenwinkel des Pilotbohrers (6) mindestens 3°, vorzugsweise zwischen 5° und 20° und besonders bevorzugt zwischen 8° und 12° größer ist als der Spitzenwinkel des Tieflochbohrers.

3. Verfahren nach einem der Ansprüche 1 bis 2, **dadurch gekennzeichnet, daß** die Kerndicke (11) des Kopfabschnittes des Pilotbohrers (6) kleiner als 25%, vorzugsweise kleiner als 22% und besonders bevorzugt zwischen 18 und 22% des Durchmessers des Pilotbohrers (6) an der Stirnfläche seines Kopfabschnittes ist.

4. Verfahren nach einem der Ansprüche 1 bis 3, **dadurch gekennzeichnet, daß** der Pilotbohrer (6) einen Bohrkern mit in Richtung des Schaftes ansteigendem Durchmesser hat.

5. Verfahren nach einem der Ansprüche 3 bis 4, **dadurch gekennzeichnet, daß** der Bohrkopf des Pilotbohrers (6) im Bereich des stirnseitigen Endes der Spiralnuten (7) Ausspitzungen (8) aufweist, die derart ausgebildet sind, daß an der Stirnseite ein reduzierter Kernbereich (12) von weniger als 20%, vorzugsweise von weniger als 15% und besonders bevorzugt von etwa 5-10% des Durchmessers des Pilotbohrers (6), gebildet wird.

6. Verfahren nach Anspruch 5, **dadurch gekennzeichnet, daß** der reduzierte Kernbereich (12) einen effektiven Spitzenwinkel aufweist, der größer als der Spitzenwinkel der Hauptschneiden (4) ist.

7. Verfahren nach einem der Ansprüche 1 bis 6, **dadurch gekennzeichnet, daß** der Durchmesser des Pilotbohrers (10) größer als der Durchmesser des Tieflochbohrers ist.

8. Verfahren nach Anspruch 7, **dadurch gekennzeichnet, daß** das Spiel zwischen Pilotbohrer (6) und Tieflochbohrer bei einem Bohrdurchmesser bis zu 3 mm zwischen 6 und 26µm, bei einem Bohrdurchmesser zwischen 3 und 6mm zwischen 12 und 36 µm, bei einem Bohrdurchmesser zwischen 6 und 10 mm zwischen 15 und 45 µm, bei einem Bohrdurchmesser zwischen 10 und 18 mm zwischen 18 und 54 µm und bei einem Bohrdurchmesser zwischen 18 und 30 mm zwischen 22 und 64 µm gewählt wird.

9. Verfahren nach Anspruch 7 oder 8, **dadurch gekennzeichnet, daß** der Tieflochbohrer mit der Toleranz h7 und der Pilotbohrer (6) mit der Toleranz p7 hergestellt wird.

10. Verfahren nach einem der Ansprüche 1 bis 9, **dadurch gekennzeichnet, daß** ein Pilotbohrer mit einem Schaft und einem Kopfabschnitt, wobei der Kopfabschnitt an seiner Stirnfläche eine kegelförmige Hauptschneide (4) und zwei spiralförmig an der Außenseite des Kopfabschnitt verlaufende Spannuten (7) aufweist, verwendet wird, wobei der Spitzenwinkel der Hauptschneide (4) größer als 145°, vorzugsweise zwischen 148 und 155° und besonders bevorzugt etwa 150° beträgt.

11. Verfahren nach Anspruch 10, **dadurch gekennzeichnet, daß** die Kerndicke (11) des Kopfabschnittes des Pilotbohrers kleiner als 25%, vorzugsweise kleiner als 22% und besonders bevorzugt zwischen 18 und 22% des Durchmessers (10) des Pilotbohrers (6) an der Stirnfläche seines Kopfabschnittes ist.

12. Verfahren nach Anspruch 10 oder 11, **dadurch gekennzeichnet, daß** die Länge der Spannuten (7) des Pilotbohrers in axialer Richtung kleiner als der 6fache Bohrdurchmesser (10), vorzugsweise kleiner als der 5fache Bohrdurchmesser und besonders bevorzugt in etwa gleich dem 4,5fachen Bohrdurchmesser beträgt.

13. Verfahren nach einem der Ansprüche 10 bis 12, **dadurch gekennzeichnet, daß** der Pilotbohrer aus Hartmetall ist.

14. Verfahren nach einem der Ansprüche 10 bis 13, **dadurch gekennzeichnet, daß** der Pilotbohrer Kühlkanäle (9) aufweist, die vorzugsweise ihren Auslaß am stirnseitigen Ende des Pilotbohrers haben.

## Claims

1. A method of producing a deep hole in a material (15) to be processed, wherein a rotationally symmetrical opening is first introduced into the material (15) to be processed by means of a pilot drill (6) having a shank and a head portion, wherein the head portion at its end face has a conical main cutting edge (4) and two chip grooves (7) extending in a spiral at the outside of the head portion, and then the deep hole to be produced is drilled by means of a deep hole drill into the bottom of the rotationally symmetrical opening, wherein the pilot drill (6) has a point angle which is greater than the point angle of the deep hole drill, **characterised in that** the core thickness (11) of the head portion of the pilot drill (6) is smaller than the core thickness of the head portion of the deep hole drill.

2. A method according to claim 1 **characterised in that** the point angle of the pilot drill (6) is at least 3°, preferably between 5° and 20° and particularly preferably between 8° and 12° greater than the point angle of the deep hole drill.

3. A method according to one of claims 1 and 2 **characterised in that** the core thickness (11) of the head portion of the pilot drill (6) is less than 25%, preferably less than 22% and particularly preferably between 18 and 22% of the diameter of the pilot drill (6) at the end face of its head portion.

4. A method according to one of claims 1 to 3 **characterised in that** the pilot drill (6) has a drill core of a diameter increasing in the direction of the shank.

5. A method according to one of claims 3 and 4 **characterised in that** the drill head of the pilot drill (6) in the region of the end of the spiral grooves (7) has point thinnings (8) which are of such a configuration that a reduced core region (12) of less than 20%, preferably less than 15% and particularly preferably about 5 - 10% of the diameter of the pilot drill (6) is formed at the end.

6. A method according to claim 5 **characterised in that** the reduced core region (12) has an effective point angle which is larger than the point angle of the main cutting edges (4).

7. A method according to one of claims 1 to 6 **characterised in that** the diameter of the pilot drill (10) is larger than the diameter of the deep hole drill.

8. A method according to claim 7 **characterised in that** the clearance between the pilot drill (6) and the deep hole drill with a bore diameter of up to 3 mm is between 6 and 26 µm, with a bore diameter of between 3 and 6 mm it is between 12 and 36 µm, with a bore diameter of between 6 and 10 mm it is between 15 and 45 µm, with a bore diameter of between 10 and 18 mm it is between 18 and 54 µm and with a bore diameter of between 18 and 30 mm it is between 22 and 64 µm.

9. A method according to claim 7 or claim 8 **characterised in that** the deep hole drill is produced with the tolerance h7 and the pilot drill (6) is produced with the tolerance p7.

10. A method according to one of claims 1 to 9 **characterised in that** a pilot drill having a shank and a head portion, wherein the head portion at its end face has a conical main cutting edge (4) and two chip grooves (7) extending in a spiral at the outside of the head portion is used, wherein the point angle of the main cutting edge (4) is larger than 145°, preferably between 148 and 155° and is particularly preferably about 150°.

11. A method according to claim 10 **characterised in that** the core thickness (11) of the head portion of the pilot drill is less than 25%, preferably less than 22% and particularly preferably between 18 and 22% of the diameter of the pilot drill (6) at the end face of its head portion.

12. A method according to claim 10 or claim 11 **characterised in that** the length of the chip grooves (7) of the pilot drill in the axial direction is less than six times the bore diameter (10), preferably less than five times the bore diameter and particularly preferably approximately equal to 4.5 times the bore diameter.

13. A method according to one of claims 10 to 12 **characterised in that** the pilot drill is of hard metal.

14. A method according to one of claims 10 to 13 **characterised in that** the pilot drill has cooling passages (9) which preferably have their outlet at the end of the pilot drill.

## Revendications

1. Procédé de perçage d'un trou profond dans un matériau (15) à usiner, un évidement symétrique en rotation étant tout d'abord réalisé dans le matériau (15) à usiner au moyen d'un foret pilote (6) muni d'une tige et d'une section de tête, la section de tête présentant sur sa surface frontale une arête principale (4) conique et deux rainures (7) à copeaux s'étendant de manière hélicoïdale sur le côté extérieur de la section de tête, puis le trou profond à percer étant percé au moyen d'un foret pour trous profonds dans la base de l'évidement symétrique en rotation, le foret pilote (6) présentant un angle de pointe supérieur à l'angle de pointe du foret pour trous profonds, **caractérisé en ce que** l'épaisseur (11) de l'âme de la section de tête du foret pilote (6) est inférieure à l'épaisseur de l'âme de la section de tête du foret pour trous profonds.

2. Procédé selon la revendication 1, **caractérisé en ce que** l'angle de pointe du foret pilote (6) est supérieur à l'angle de pointe du foret pour trous profonds d'au moins 3°, de préférence entre 5° et 20° et de manière particulièrement préférée entre 8° et 12°.

3. Procédé selon l'une quelconque des revendications 1 à 2, **caractérisé en ce que** l'épaisseur (11) de l'âme de la section de tête du foret pilote (6) est inférieure à 25%, de préférence inférieure à 22% et de manière particulièrement préférée comprise entre 18 et 22% du diamètre du foret pilote (6) sur la surface frontale de sa section de tête.

4. Procédé selon l'une quelconque des revendications 1 à 3, **caractérisé en ce que** le foret pilote (6) présente une carotte dont le diamètre augmente en direction de la tige.

5. Procédé selon l'une quelconque des revendications 3 à 4, **caractérisé en ce que** la tête de forage du foret pilote (6) présente dans la zone de l'extrémité frontale des rainures hélicoïdales (7) des amincissements (8) réalisés de telle sorte qu'une zone (12) d'âme réduite inférieure à 20%, de préférence inférieure à 15% et de manière particulièrement préférée comprise entre environ 5 et 10% du diamètre du foret pilote (6) soit formée sur la face frontale.

6. Procédé selon la revendication 5, **caractérisé en ce que** la zone (12) d'âme réduite présente un angle de pointe effectif supérieur à l'angle de pointe des arêtes principales (4).

7. Procédé selon l'une quelconque des revendications 1 à 6, **caractérisé en ce que** le diamètre du foret pilote (10) est supérieur au diamètre du foret pour trous profonds.

8. Procédé selon la revendication 7, **caractérisé en ce que** le jeu entre le foret pilote (6) et le foret pour trous profonds est choisi entre 6 et 26 µm pour un diamètre de forage allant jusqu'à 3 mm, entre 12 et 36 µm pour un diamètre de forage compris entre 3 et 6 mm, entre 15 et 45 µm pour un diamètre de forage compris entre 6 et 10 mm, entre 18 et 54 µm pour un diamètre de forage compris entre 10 et 18 mm et entre 22 et 64 µm pour un diamètre de forage compris entre 18 et 30 mm.

9. Procédé selon la revendication 7 ou 8, **caractérisé en ce que** le foret pour trous profonds est fabriqué selon la tolérance h7 et le foret pilote (6) selon la tolérance p7.

10. Procédé selon l'une quelconque des revendications 1 à 9, **caractérisé en ce qu'**un foret pilote muni d'une tige et d'une section de tête est utilisé, la section de tête présentant sur sa surface frontale une arête principale (4) conique et deux rainures (7) à copeaux s'étendant de manière hélicoïdale sur le côté extérieur de la section de tête, l'angle de pointe de l'arête principale (4) étant supérieur à 145°, de préférence compris entre 148 et 155°, et de manière particulièrement préférée d'environ 150°.

11. Procédé selon la revendication 10, **caractérisé en ce que** l'épaisseur (11) de l'âme de la section de tête du foret pilote est inférieure à 25%, de préférence inférieure à 22% et de manière particulièrement préférée comprise entre 18 et 22% du diamètre (10) du foret pilote (6) sur la surface frontale de sa section de tête.

12. Procédé selon la revendication 10 ou 11, **caractérisé en ce que** la longueur des rainures (7) à copeaux du foret pilote dans la direction axiale est inférieure à 6 fois le diamètre (10) de forage, de préférence inférieure à 5 fois le diamètre de forage et de manière particulièrement préférée environ égale à 4,5 fois le diamètre de forage.

13. Procédé selon l'une quelconque des revendications 10 à 12, **caractérisé en ce que** le foret pilote est constitué de métal dur.

14. Procédé selon l'une quelconque des revendications 10 à 13, **caractérisé en ce que** le foret pilote présente des canaux (9) de refroidissement dont la sortie se trouve de préférence à l'extrémité frontale du foret pilote.
